(19) Europäisches Patentamt

European Patent Office

Office européen des brevets

(11) EP 0 775 626 B1

(12) EUROPEAN PATENT SPECIFICATION

(45) Date of publication and mention
of the grant of the patent:
**12.06.2002 Bulletin 2002/24**

(51) Int Cl.⁷: **B63B 1/02**, B63B 1/40,
B63B 1/04

(21) Application number: 95923171.3

(22) Date of filing: 30.06.1995

(86) International application number:
**PCT/CN95/00054**

(87) International publication number:
**WO 96/05096 (22.02.1996 Gazette 1996/09)**

(54) **PLANING VESSEL**

GLEITBOOT

VAISSEAU PLANANT

(84) Designated Contracting States:
**BE DE DK ES FR GB GR IT NL PT SE**

(30) Priority: **13.08.1994 CN 94114846**
**02.03.1995 CN 95203983**

(43) Date of publication of application:
**28.05.1997 Bulletin 1997/22**

(73) Proprietor: **Chen, Zhencheng**
**Beijing 100080 (CN)**

(72) Inventor: **Chen, Zhencheng**
**Beijing 100080 (CN)**

(74) Representative: **Darby, David Thomas**
**Abel & Imray,**
**20 Red Lion Street**
**London WC1R 4PQ (GB)**

(56) References cited:
**WO-A-95/16603          CN-A- 1 036 734**
**GB-A- 1 106 441         US-A- 2 938 490**
**US-A- 3 602 179         US-A- 5 231 949**
**US-A- 5 357 894**

**Description**

**Field of the invention**

This invention relates to a means of water transport and communication, more particularly, it pertains to planing vessels.

**Background art**

General displacement ship has better stability and can meet the needs of various cargo tonnage. However, it has deeper draft and carries more cargo, its hull is more draft, which results in greater water resistance during ship in moving, that leads to large power consumption. Therefore, increase in its speed is difficult, it is difficult to navigate in the river with shallow water, rapid and strong current, and with submerged reef; the controllable range of speed change is small.

Hydrofoil craft shakes off a large part of water resistance, its speed is enhanced. But its load carrying capability, flexibility, maneuverability and seaworthiness are poor, it is difficult in operating smooth in the river with strong and rapid current, shallow water,as well as in rough waters.

Surface effect craft, as an example, hovercraft shakes off water resistance, its speed increases. But, it can not use the hydrodynamic buoyancy to support gross weight. The cargo tonnage isn't large. Besides, the power consumption is large to create dynamic air cushion. Particularly, its surperiority disappears under a raid of lateral wind.

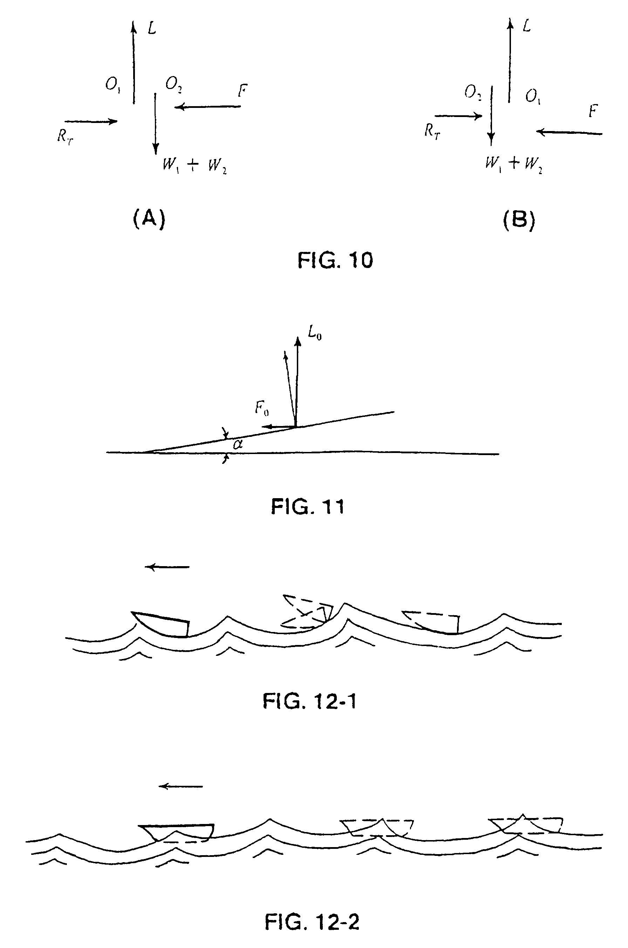

General planing boat having shallow draft in planing state increases the speed. Adopting the hull with v bottom type cross section, its own course stability, lateral stability and maneuverability are improved. However, it leads to heighten the water resistance due to increase of the wetted area of the hull, moreover the lift surface at the stem is larger than at the stern, that results in the increase of resistance owing to heighten the swell height of water surface nearby the stem; it creates the tendency of bounce and pitching on rough waters(Fig. 12-1); It is unsuitable to operate in the river having strong and rapid current, shallow water as well as in the sea with rough waters. The certain improved planing boats, for example, U. S. Patent No. 5265554, 5016552 and 4722294, etc.. They have shallow - V hulls or partly deep - V bottom, have certain merits. However, their performances are still to be in the frame of general planing boats, the improvements are insufficient; particularly, that hull layout is sensitive to respond to the wave, its performance to overcome stormy wave is poor.

The sea - knife boat is the one of planing boats, its speed and performance to overcome stormy wave are better than general boats, But its hull with a pure triangle plane bottom results in shortage of course stability, manoeuvrability and seaworthiness thereof.

In US 2,938,490, a boat hull is described in which the bottom structure has a cross-section including alternate projections and depressions, the depressions comprising passageways between the projections extending from bow to stem and decreasing in width and height from the bow to the stern. The provision of alternate projections and depressions creates multiple leading edges to improve lift, reduce the frictional resistance of the boat and eliminates suction by supplying air under the hull from the open front of the depressions.

In GB 1,106,441, a boat hull is described including a central keel and two spaced bilge keels. Tunnels are formed between the central keel and the bilge keels, the top of the tunnels being higher at the bow than at the stem. The tunnels reduce the frictional resistance of the boat and improve lateral stability. Water forced sideways is prevented from boarding the boat by means of lateral projections at the sides of the boat.

**Features of the Invention**

The present invention provides a planing vessel comprising:

> a system of propulsion and control;
> a cabin and superstructure; and
> a hull, the hull comprising:

>> two boards;
>> a deck; and
>> a substantially planar bottom having a depression part denting upwardly into and extending lengthwise throughout said bottom in a space between said bottom and said deck, the depression part composed of one or more swell guideways, the base centerline of one of said swell guideways being substantially coincident with the centerline of said bottom and/or the base centerlines of an even number of said swell guideways being arranged parallel with respect to and symmetrically with respect to the centerline of said bottom,

characterized in that:

said bottom has an isosceles triangle portion at the front and a rectangle portion at the rear;
each one of said one or more swell guideways has a cross-section of a denting shape with an arch top, or with an inverted V-shaped top, or with a top with a high center arch and two half-arches placed symmetrically at lower positions on both sides, and a longitudinal-section with a top line having a lower front and a higher rear;
said hull further comprising a pair of wave-splash guards on boards below said deck and above said bottom, said guards being inclined baffles with a lower front and a higher rear and being inlaid into boards or dented into boards to form an integrated body.

In order to eliminate the drawbacks of the means of water transport and communication in present art mentioned above, a planing vessel is offered by this invention. The vessel comprises a hull, propulsion and control system, etc. The hull consists of a bottom **1**, boards **2,** deck **3,** swell guideways **4** and wave-splash guards **5,** the cabin and superstructure. Therein a flat bottom **1** is composed of an isosceles triangle ahead and a rectangle behind. Denting vertically into and lengthways throughout the bottom, in the space between bottom **1** and deck **3,** one or more swell guideways **4** are set, their base plane longitudinal centerlines are parallel to the centerline of bottom **1** (if only one swell guideway is set, its base plane centerline coincides with the centerline of bottom **1**). Its cross section is an arch top, or an inverted v-shaped top, or a top with a high center arch and two half arches placed symmetrically at lower positions on both sides, longitudinal section has a top line with a lower front and a higher rear: a pair of wave-splash guards **5** being the baffles with inclination have lower front and higher rear,which are symmetrically inlaid or dented one into either board **2** as an integral whole below the deck **3** above the bottom **1**. The hull having these structures as mentioned here can arouse the hydrodynamic flow field and corresponding great enough hydrodynamic buoyancy with reasonable distribution as designed during the vessel in moving. That makes the hull shake off water resistance in maximum limit to heighten its own speed, at the same time, use the hydrodynamic buoyancy aroused to carry its own weight and load weight, to meet the needs of various cargo tonnage; and have fine course stability, lateral stability, flexibility, maneuverability and seaworthiness; and have advantages over existing various boats and ships in cutting through rough waters, reach the supercritical operation state to chop smooth on rough waters.

The stern may have a step. When the vessel is moving in displacement state at low speeds, the step is overspreaded by a step cover which forms a smooth streamline stern end to reduce the water resistance. The cover may be retracted, when the hull has been lifted out of the water and runs in planing state. The step uncovers, hence the race of the hull is separated from the hull behind the step. Thus the wetted area is reduced, so that leads to decrease the resistance greatly, as a result the vessel speed is increased further. The stern may be designed to be the stepless streamline or else.

For the planing vessel having the hull with the features of the invention indicated above, a layout of propulsion and control system provided by the invention may be disposed as follows: At the rear of the hull, inner side of both boards below the deck **3**, in the space between the deck **3** and waterline during the vessel in planing state, one or more water-jet propulsion plants **7** are positioned near the water surface. The water jets are set at the stern end. The rudders **6** are set off the stem end slightly and one by one corresponded to the jets. Jets and rudders are located above, but near the water surface during the vessel in planing state. The features of the hull provided by the invention can display perfect performance in navigating. In addition, the hull with features of the invention may also adopt propellor or other propulsion and control systems. This invention applies to various types of small - sized, middle - sized as well as large - sized boats and ships for different uses.

**Description of the drawings**

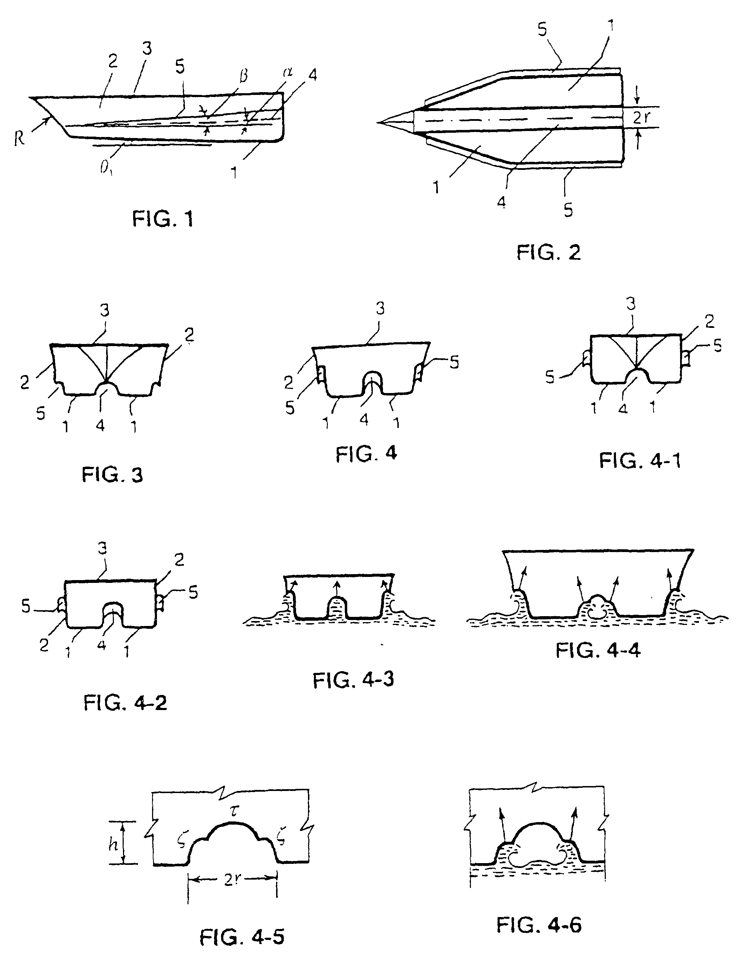

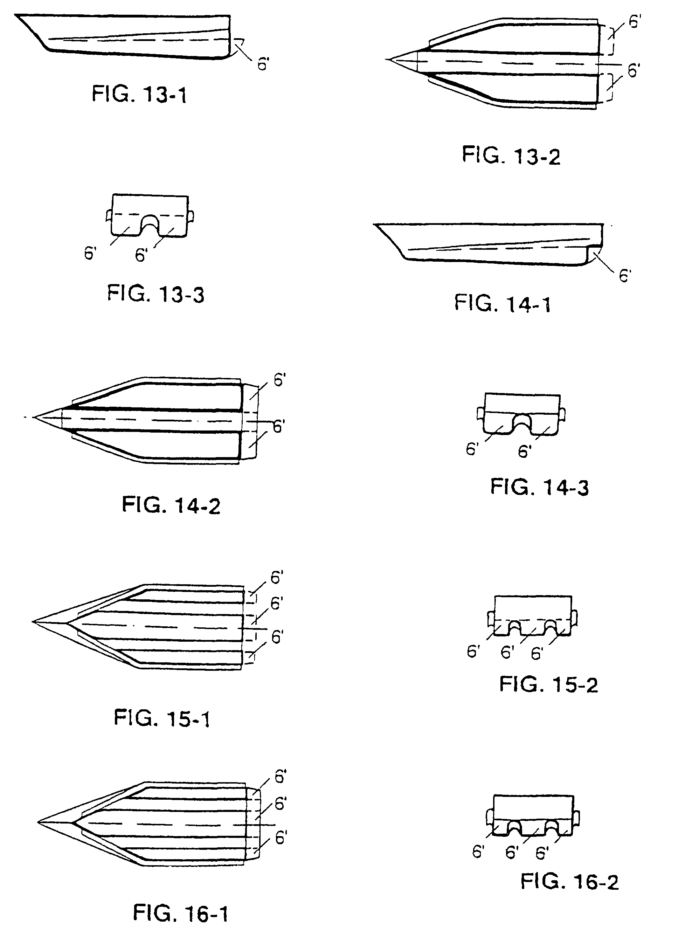

(Each figure from Fig. 1 to Fig. 16-2 expresses only the part of hull structure below the deck of planing vessel provided by the invention. )

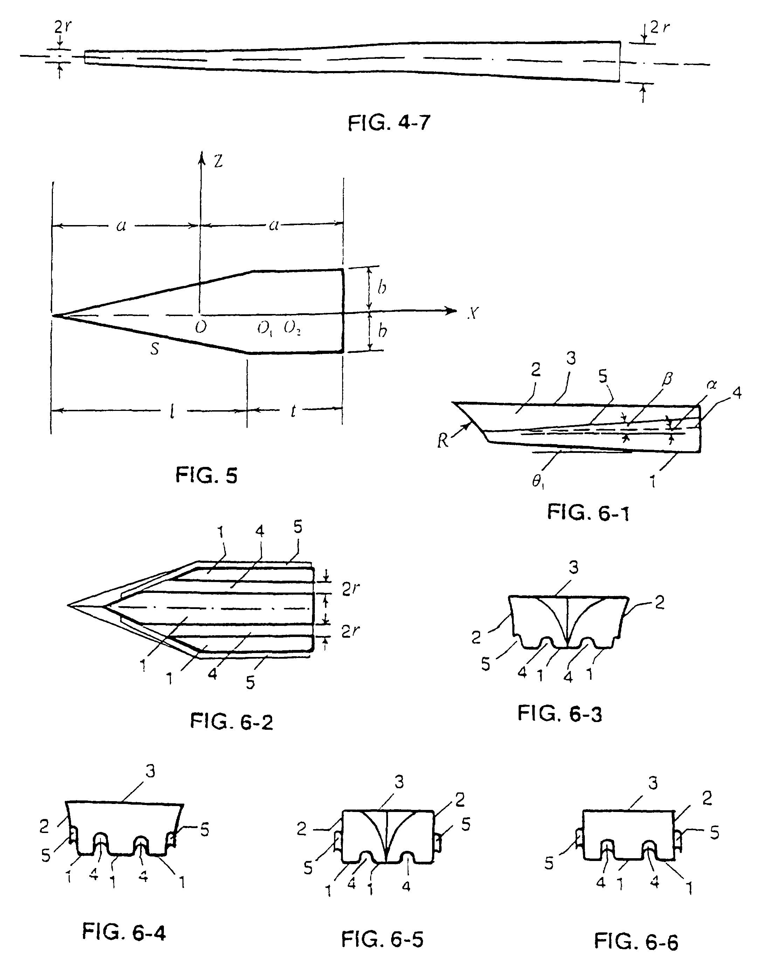

Figs. 1,2 are respectively a side elevation view, bottom plan view of a hull of the planing vessel provided by the invention, **1** - bottom,**2** - board,**3** - deck,**4** - swell guideway,**5** - wave - splash guard, $\alpha$ - the inclination of top line of swell guideway to the bottom plane, $\beta$ - the inclination of wave - splash guard to the bottom plane, $\theta_1$ - attack angle of the bottom plane against the horizontal during the vessel in static state, R - curvature radius at the stem, 2r - width of the base plane of swell guideway. Fig. 3 is a front elevation view of the hull shown in Fig. 1, Fig. 4 is the rear elevation view, therein wave - splash guards **5** dent into the surfaces of boards **2** as an integral whole.

Figs. 4-1,4-2 are respectively a front, rear elevation view of the hull of Fig. 1, where a pair of wave - splash guards **5** are inlaid one into either board **2** surface ;
Fig. 4 - 3 is a rear elevation view of the hydrodynamic flow field aroused by the hull shown in Fig. 1 during the vessel in moving, where vertical arrow expresses the additional lift offered by the swell guideway, two arrows symmetrically inclining inward express the additional forces offered by the wave - splash guards.

Figs. 4 - 4 is a rear elevation view of the flow field for a swell guideway with a cross section having a top with a high center arch and two half arches placed symmetrically at lower positions on both sides; therein the arrows symmetrically inclining outward express the additional forces offered by the swell guideway, arrows symmetrically inclining inward express the additional forces offered by the wave-splash guards.

Figs. 4 - 5, 4 - 6 are respectively the cross section view of the swell guideway with a cross section having a top with a high center arch and two half arches placed symmetrically at lower positions on both sides, wherein h - top height of the section, 2r - width of the base plane of the swell guideway, $\zeta$ - arc length of the side, $\tau$ - arc length of the top, the arrows symmetrically inclining outward express the additional forces offered by swell guideway.

Fig. 4 - 7 is a base plan view of swell guideway while the r< r".

Fig. 5 is a plane layout scheme of the bottom **1**, therein 2a-overall length of bottom **1**, 2b- width of bottom **1**, S - equilateral length of the triangle part of bottom **1**, O - midpoint of the centerline of bottom **1**, OX - X axis coinciding with the centerline of bottom and taking point O as origin of coordinate, OZ - Z axis being perpendicular to the OX, $l$ - projection of S on OX axis, $t$ - length of rectangle part of bottom **1** in the direction OX, $O_1$ - coordinate of centre of the hydrodynamic buoyancy, $O_2$ - coordinate of gravity centre of the vessel.

Figs. 6-1,6-2,6-3,6-4 are respectively the side elevation, bottom plan, front elevation and rear elevation views of the hull with a pair of swell guideways **4**, where the wave - splash guards **5** dent one into either board **2** as an integral whole;

Figs. 6-5,6-6 are the front,rear elevation view of the hull of Fig. 6-1 respectively, where a pair of wave-splash guards **5** are inlaid one into either board **2** surface.

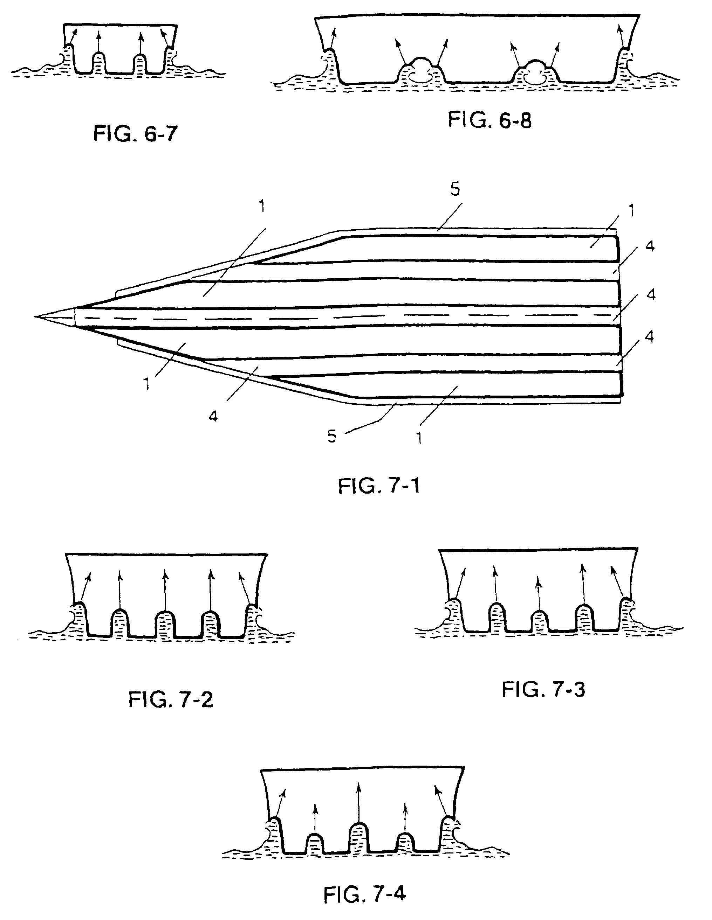

Figs. 6-7,6-8 are the rear elevation view of the hydrodynamic flow field aroused by the moving hull with a pair of swell guideways **4,** therein in Fig. 6-7 the vertical two arrows express the additional lifts offered by the swell guideways, in Fig. 6-8 the arrows symmetrically inclining inward or outward in the space inside both boards express the additional forces offered by the swell guideways; in Figs. 6-7,6-8 the arrows symmetrically inclining inward at boards express the additional forces offered by the wave - splash guards.

Fig. 7 - 1 is a bottom plan view of the hull with three swell guideways **4**, Figs. 7 - 2, 7-3,7-4 are the rear elevation view of the hydrodynamic flow field aroused by the hull in moving, therein vertical three arrows express the additional lifts offered by the swell guideways, two arrows symmetrically inclining inward express the additional forces offered by the wave - splash guards; in Fig. 7 - 2 three swell guideways have the same height and inclination, in Figs. 7-3,7-4 three swell guideways with different heights and inclinations are shown.

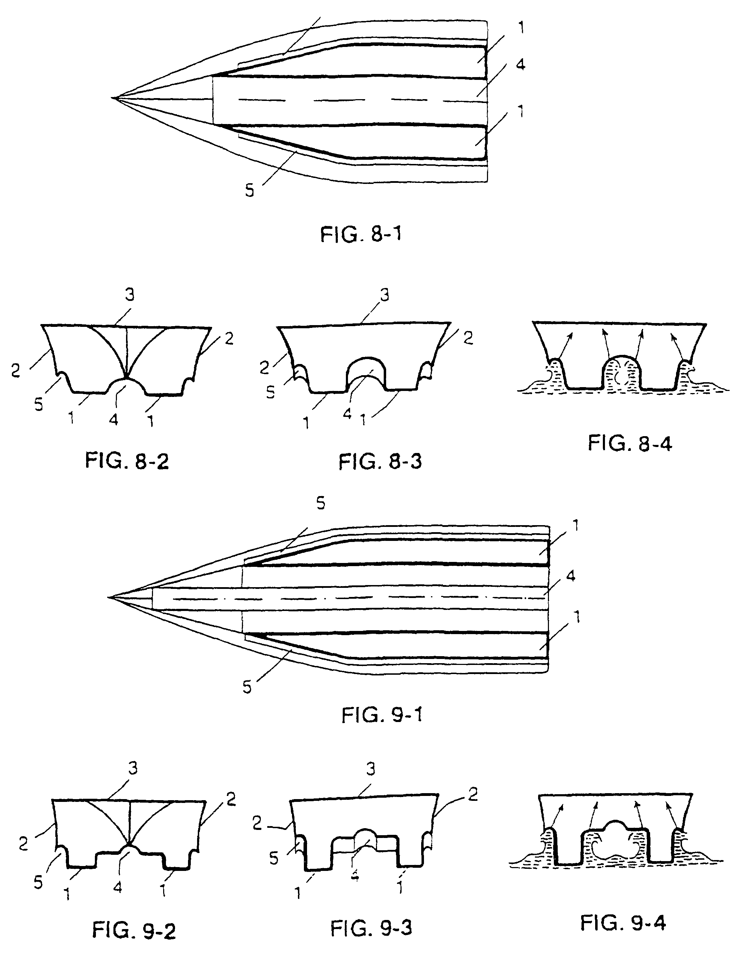

Figs. 8-1,8-2,8-3 are respectively the bottom plan view, front and rear elevation views of the hull with wider swell guideway;Fig. 8 - 4 is a rear elevation view of hydrodynamic flow field aroused by the hull in moving, where two arrows symmetrically inclining outward express the additional forces offered by swell guideway,two arrows symmetrically inclining inward at boards express the additional forces offered by wave - splash guards.

Figs. 9-1,9-2,9-3 are respectively the bottom plan view, front, rear elevation view of the hull with swell guideway having large width;Fig. 9 - 4 is a rear elevation view of the hydrodynamic flow field aroused by the hull in moving, therein two arrows symmetrically inclining inward at. the inside express the additional forces offered by swell guide-way,symmetrically inclining inward at the boards express the additional forces offered by wave - splash guards.

Fig. 10 is a dynamic balance scheme during the vessel in moving, where L - hydrodynamic buoyancy, $W_1$ - its own weight of the hull, $W_2$ - load weight, F - total thrust, $R_T$ - total resistance, $O_1$ - location of centre of the hydrodynamic buoyancy, $O_2$ - location of centre of gravity of the vessel.

Fig. 11 is a side view of the additional hydrodynamic force offered by the swell guideway in the flow field aroused by the hull in moving, where $\alpha$ - inclination of top line of the swell guideway to the bottom plane, $L_0$ - additional lift, $F_0$ - additional thrust.

Fig. 12-1 is a sketch map of side view describing the attitude and relation of a planing boat having conventional hull to the ambient rough waters, where the arrow indicates the direction of advance of the boat ;

Fig. 12 - 2 is a sketch map of side view describing the attitude and relation of a planing vessel with the hull having features of this invention to the ambient rough waters.

Figs. 13 - 1,13 - 2,13 - 3 are, respectively, a side elevation, bottom plan and rear elevation views of the hull with a swell guideway **4** and mobile rigid or semirigid step cover at the stern, where **6'** - step cover;

Figs. 14 - 1,14 - 2,14 - 3 are respectively a side elevation, bottom plan and rear elevation views of the hull with a swell guideway **4** and flexible step cover at the stern;

Figs.15-1,15-2 are respectively a bottom plan view, rear elevation view of the hull having a pair of swell guideways **4** and a mobile rigid or semirigid step cover at the stem, the side elevation view of the hull is the same as shown in Fig. 13 - 1;

Figs. 16 - 1,16 - 2 are respectively a bottom plan view, rear elevation view of the hull with a pair of swell guideways and a flexible step cover at the stern, the side elevation view of the hull is the same as shown in Fig. 14-1.

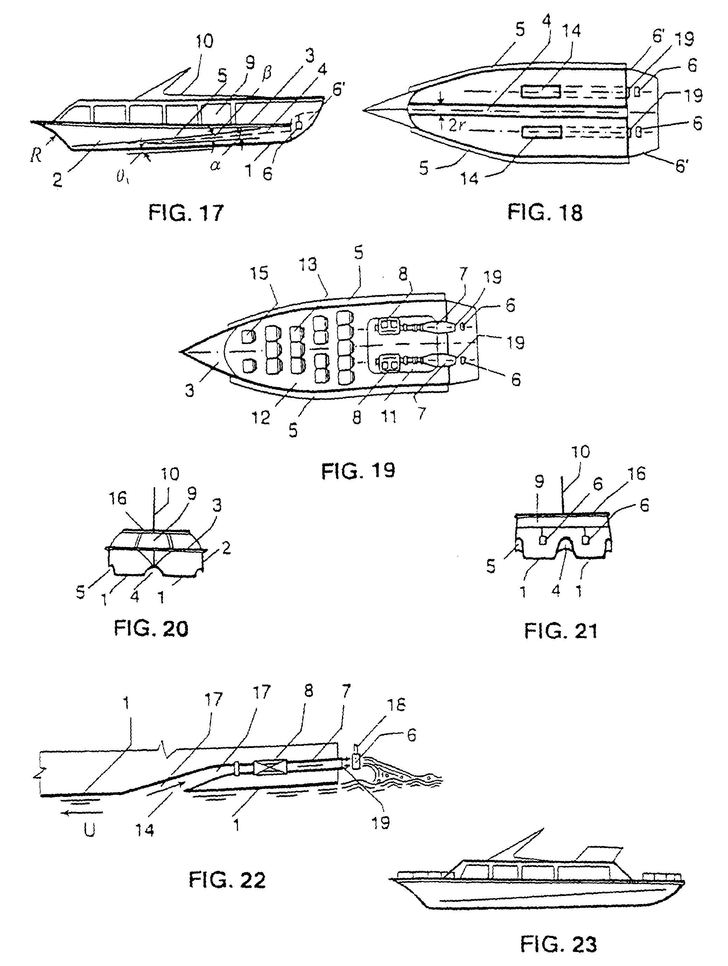

Fig. 17 is a side elevation view of a planing vessel with a swell guideway **4** and a pair of water - jet propulsion plants 7; Fig.18 is its bottom plan view; therein **9** - superstructure, **10** - ship mast, **6** - rudder, **14** - water inlet, **19** - jet, **6'** - step cover.

Fig. 19 is a top plan view as seen approximately from the deck plane of the planing vessel, where **7** - water - jet propulsion plant, **8** - power plant, **11** - engine room, **12** - passenger cabin,**13** - passenger seat. **15** - driver seat; Figs. 20,21 are respectively a front, rear elevation view of the vessel, where **16** - ceiling.

Fig. 22 is a longitudinal section view of the power water - jet propulsion system, where **17** - water entry way, **18** - rotating axis of the rudder, U - ship speed.

Fig. 23 is a side elevation view of a traffic boat pertaining to series of planing vessel designed on the basis of the features of the invention and considering the needs of traffic boat cabin and superstructure.

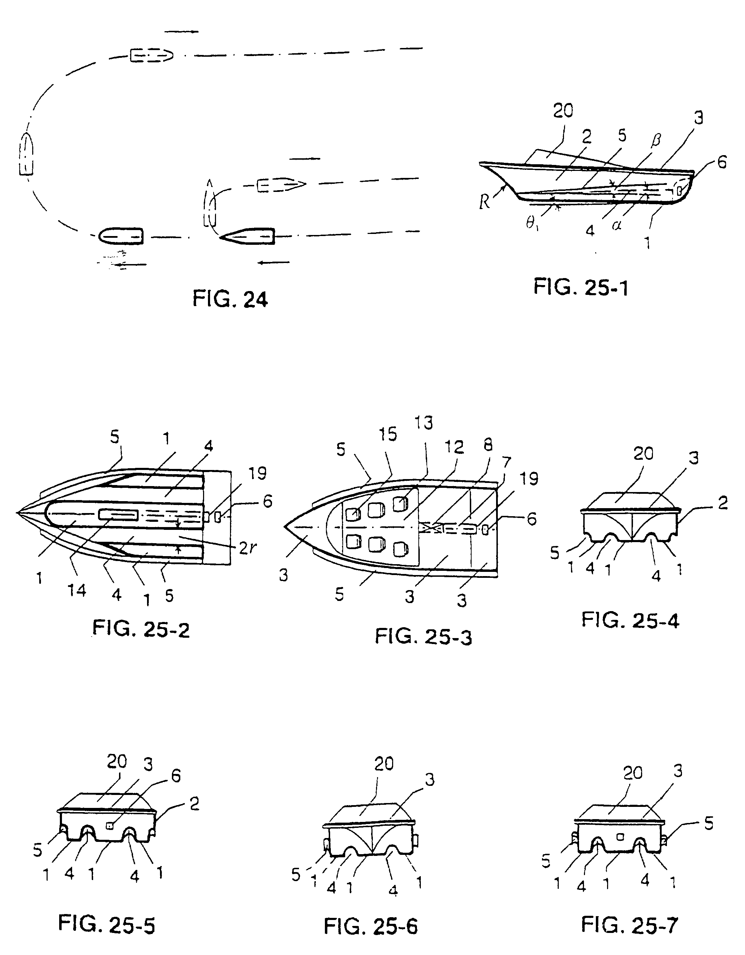

Fig. 24 is a schematic plan view of the comparison between the turning radius of the planing vessel of this invention (with sharp head) and the turning radius of conventional ship (with blunt head) in turn.

Figs. 25-1,25-2,25 - 3 are respectively a side elevation view, bottom plan view, top plan view as seen approximately from the deck plane of the boat of the invention, which has a pair of swell guideways **4** and a water - jet propulsion plant **7**; Figs. 25-4,25 -5 are respectively a front, rear elevation view of the boat, in which the wave - splash guards are dented into the boards; but in Figs. 25 - 6 and 25-7, the guards are inlaid into board surfaces; therein **20 - windshield**.

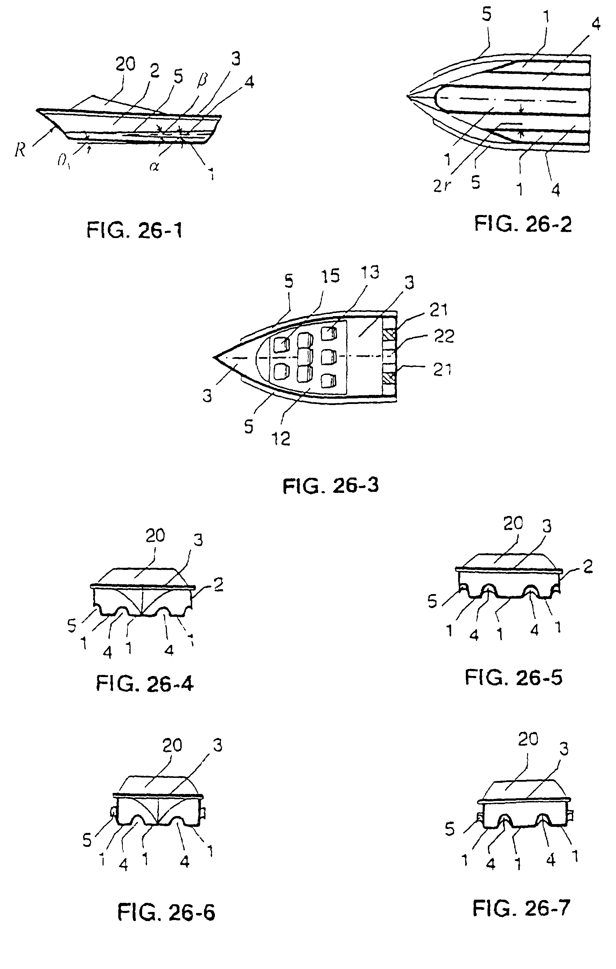

Figs.26-1,26-2,26-3 are respectively a side elevation view, bottom plan view, top plan view as seen approximately from the deck plane of the boat having two swell guideways **4** and adopting one or two outboard motors as propellor; Figs. 26 - 4,26 - 5 are respectively a front, rear elevation view of the boat with a pair of wave - splash guards denting into boards; Figs. 26-6,26-7 are respectively a front, rear elevation view of the boat with a pair of wave - splash guards inlaying one into either board surface.

**Description of the preferred embodiment of the invention**

As shown in Figs. 1,2,3,4, the part below the deck plane of the hull provided by this invention mainly comprises bottom **1**, two boards **2,** deck **3,** swell guideways **4** denting vertically into the space between bottom **1** and deck **3,** a pair of wave - splash guards **5** setting at the boards **2.** Bottom **1** consists of an isosceles triangle ahead and a rectangle behind; referring to Fig. 5, the specific size of the bottom **1** is determined as follows:

The coordinate origin $O$ is located at the centerline of bottom **1** and is the midpoint of overall length $2a$ of bottom **1**, $OX$ is the ordinate, $OZ$ is the abscissa; $l$ is the projection length of both equilateral length $S$ of the triangle part of bottom **1** on $OX$ axis, the length of the rectangle part in the direction $OX$ is $t$, the width in the direction of $OZ$ axis is 2b. The specific sizes of $l,2b,t$ are determined according to the needs of design and referring to the expressions (1),(2):

Expression (1) is $L=2\rho U^2 a^2 P \sin\theta$, ($L$ is the hydrodynamic buoyancy) , where,

$$P = \int_{-a}^{a-l} T_1(x)\ dx + \int_{a-l}^{a} T_2(x)\ dx, \quad T_1(x) = \int_{-b(x)}^{b(x)} p(x,z)\ dz,$$

$$p(x,z) = \frac{Ka}{1-K\delta}\left\{\frac{G\ \exp(-\overline{G}x)\ \cosh k_0 z}{k_0\ \xi\ \cosh\overline{G}\ \cosh k_0 b} + 2\sum_{n=1}^{s}\frac{(-1)^{n-1}}{C_n^2}\left[ -\sin C_n x + \right.\right.$$

$$k_0 R_n \cos B_n z(B_n \cos C_n x - k_0 \sin C_n x) + k_0 GbJ_n \cos D_n z(D_n \cos E_n x$$

$$\left.\left. - \ k_0 \sin E_n x)\right]\right\} \quad ,$$

$R_n = 1/ (k_0^2 + B_n^2)\cos B_n b,\ J_n = 1/(k_0^2 + D_n^2)\cos E_n,\ B_n = GC_n,\ \zeta=\sqrt{1+\varepsilon^2},\ C_n=(2n-1)\pi/2,\ D_n=C_n/b',\ E_n=C_n/Gb',\ b(x)=bx/l,\ x=X/a,\ z=Z/a,\ G=\sqrt{(1-K\delta)/K\delta},\ K=g/U^2,$

$$T_2(x) = \int_{-\delta}^{\delta} p(x,z)\ dz,$$

$\varepsilon=0.0045,\ \overline{G}=k_0/G,\ b'=b/a.$

Expression (2) is $X = M/L$, ($X$ is the distance between the point $O$ and the centre $O_1$ of the hydrodynamic buoyancy),

where ,

$$M=2\rho U^2 a^3 N sin\theta,$$

$$N = \int_{-a}^{a-l} x T_1(x)\ dx + \int_{a-l}^{a} x T_2(x)\ dx,$$

$\rho$ is density of water; $U$ is ship speed; $\theta$ is attack angle of the bottom plane against the horizontal during the vessel in moving; $W_1$ is its own weight; $W_2$ is load weight; $M$ is force moment of lift pressure $p(x, z)$ on the bottom plane with respect to the midpoint $O$ of the bottom centerline; $\theta_1$ is attack angle of the bottom plane against the horizontal during the vessel in static state, general, about 5° is taken, it may also be determined by the permissible static draft at the stern end, length of the vessel and other factors;$0.1 \leq k_o \leq 1$ (or determined by the needs of design); $g$ is acceleration of gravity; $\delta$ is half depth of the stem end draft (determined by the needs of design). $L = W_1 + W_2$ when the vessel is in planing state.

One or more swell guideways **4** are set by denting vertically into and lengthwise throughout the bottom **1** in the space between deck **3** and bottom **1**. Each swell guideway **4** is a groove having the cross section with an arch top, or with an inverted v-shaped top, or with a top with a high center arch and with two half arches placed symmetrically at lower positions on both sides, and a longitudinal section with a top line having a lower front and higher rear. The depth denting vertically into bottom **1** at the front end of the groove is on the waterline during the vessel in static state. For the vessel with deeper draft in static state, the concave depth may be slightly lower than the waterline according as the needs of design. The top line of swell guideway **4** having lower front and higher rear forms an inclination $\alpha$ to the bottom plane.

The inclination $\alpha$ and the width 2r of the base plane of swell guideway **4** are determined in accordance with the needs of design and referring to the expressions (3), (4).

Expression (3) is $F_o = 4\rho U^2 a^2 Q sin\theta sin\alpha$ ,($F_o$ is the additional thrust offered by the swell guideway),

where,

$$Q = \frac{H_1 tanh\overline{G}}{k_0^2 \xi\ cosh k_0 b} - k_0 \sum_{n=1}^{3}\left[(-1)^{n-1} J_n H_2\ sin E_n + R_n \frac{H_3}{G}\right],$$

$$H_1 = 4r' + A k_0^2,\ H_2 = \frac{A}{b'} - \frac{4b'r'}{C_n^2},$$

$$H_3 = AG^2 - \frac{4r'}{C_n^2},\ A = 2r'b'^2 + 4b'r'^2 + 8r'^3/3,\ r' = r/a.$$

Expression (4) is $L_o = 4\rho U^2 a^2 Q\ sin\theta\ cos\alpha$,($L_o$ is the additional lift offered by the swell guideway) .

It is known from Figs. 1,3 and 4, a pair of wave - splash guards **5** are set one on either board **2** fore and aft. The wave - splash guard **5** with lower front and higher rear has an inclination $\beta$ to bottom **1**. $\beta$ is the matching angle of $\alpha$, its specific degree is determined according to design and referring to the angle $\alpha$. The lowest point of front end of the guard **5** is on the waterline during the hull in static state , for the hull with deeper draft in static state, it may be slightly lower than the waterline according to the design. Wave - splash guard **5** is a baffle having an arc, ⌒ type or ⌒ type cross section and is inlaid one into either board surface (Figs. 4-1,4-2,6-5,6-6), or dented one into either board **2** at the relevant location and formed as an integral whole with board **2** (Figs. 3,4,6-3,6 -4).

In this invention the bottom **1** is designed to be a plane base comprising isosceles tri angle and rectangle, but not to be V bottom, correspondingly the stem is also sharp, but the stern is wide. A corner of the stem base is cut, which becomes arc, its curvature radius is R (Fig. 1), so the lift surface of the stem is very small during the vessel in planing state. When the stem enters waves, there is not big slamming disturbance; a small force moment of trim by stem may arise when the vessel continues to cut through waves. But this force moment of trim by stern is eliminated by the force moment of trim by stem, which arises from the large lift surface at the stem, thus the trim is small. Moreover, at the stem, below deck **3** the fore foot is cut (Fig.1), lower part of the boards is nearly vertical (Figs. 3,4,4-1,4-2), thereby the sensitivity responding to the waves is lowered greatly. An important condition is provided to make the vessel chop smoothly on the rough waters over which it moves (Fig. 12-2). The front of bottom **1** is designed as an isosceles triangle, which is beneficial to cut through the rough waters. The rear of bottom 1 is designed to be a rectangle, which is advantageous to increase usable space of the hull and to move the centre $O_1$ of hydrodynamic buoyancy L forward appropriately. That is to make $O_1$ be located in a best range by regulating the sizes of *s, t, b* in design. So as to regulate the location of $O_2$ in operation: when the force moment consisting of the total thrust, total resistance and hydrodynamic buoyancy with respect to the centre $O_2$ of gravity of the vessel has counterclockwise direction, $O_1$ is slightly ahead of $O_2$(Fig. 10A); if the force moment has clockwise direction, $O_1$ is slightly behind (Fig. 10B). Then, a fine planing attack angle may be formed during the vessel in moving.

In order to reduce the water resistance, increase the additional lift and thrust and improve the course stability, lateral stability one or more swell guideways **4** having 2r width and paralleling centerline of bottom **1** are set by denting vertically into and lengthwise throughout the bottom **1**. (Figs. 1,2,4,6-2,6-4,7-1,7-2). When the hull moves, the hydrodynamic buoyancy buoys the hull up, and enters planing state, nearby the stem a part of the water pushed by moving hull would enter the swell guideway **4** and flow smooth out of the stem. So the swell height of water surface nearby the stem is lowered, then the water resistance is correspondingly reduced greatly. Seeing from the base plane of bottom **1** (Fig. 2), there are twin planing plates with 2r width interval between them. A part of the pushed water must gush into the space with 2r width, another part gushes to the outside of both plates. Hence, nearby both boards **2** the swell height of the water surface caused by the water pushed to both boards **2** by bottom **1** would lower, because a part of water gushes into the swell guideway **4**. Thus the energy loss would lower, as a result , the water resistance is reduced. The water gushing into swell guideway **4** not only reduces the resistance, but also arouses additional lift and force moment of lateral stability (Figs. 4-3,6-7, etc.). Thereby the course stability, lateral stability and manoeuvrability of the hull are improved. The top of swell guideway **4** having lower front and higher rear forms inclination α to bottom **1**, that makes the additional force offer a part of forward thrust (Fig. 11). It leads to heighten the vessel speed further. As seen from the cross section shown in Figs. 2,3 and 4, the length of concave arc is larger than 2r, that is to say, setting of swell guideway **4** increases the wetted area of bottom **1**, so it may lead to increase the frictional resistance. But in fact, selecting appropriately the inclination α of top line, the additional thrust offered by swell guideway **4** is larger than the increased frictional resistance greatly. Moreover, lowering the swell height of water surface nearby the stem and both boards **2**, the water resistance would reduce greatly. The advantages of swell guideway **4** in reducing resistance, increasing thrust and lift are shown clearly.

Cross section of swell guideway 4 may be designed as a top with a high center arch and two half arches placed symmetrically at lower positions on both sides (Figs. 9- 4, 4- 4, 4 - 5,4-6) and ζ<r (Fig.4 - 5), then, when the hull enters planing state, the water gushes upward and rolls along the arc ζ (Fig. 4 - 6), hence the arc τ avoids wetting. As such, setting swell guideway **4**, in fact, owing to decrease of the wetted area, the frictional resistance of water is reduced; thus the vessel speed would heighten further. For the bottom **1** with large a: b, the base plane of swell guideway **4** may be made as the shape shown in Fig. 4 - 7. But its taper must be limited in a small range for the purpose of more lowering the swell height of water surface nearby both boards **2**. but without emergence of vortex and turbulent flow in the groove. It may be adopted only when reduction of resistance and increase of thrust have advantages over that of a long rectangle base plane through checking the computations and experiments.

For middle - sized and large - sized vessel, many swell guideways **4** may be set according to the needs (Figs. 6-2,6-4,7-1,7-2, or more), or wider, or very wide swell guideway **4** may be set (Figs. 8-1,8-2,8-3; Figs. 9-1,9-2,9-3). For small - sized tour boat having the particular needs in lateral stability, two swell guideways may be set symmetrically (Figs.25-1,···,25-7,Figs.26-1,···,26-7).

In a few words, setting of swell guideway **4** makes the hull reduce the water resistance greatly, moreover, create the additional lift and thrust, hence, heighten its own speed, course stability and lateral stability, also improve its own maneuverability, flexibility and seaworthiness, lower sensitivity to cut through rough waters.

In this invention,the wave - splash guards **5** are set at both boards **2**(Figs,1,2,3,4, 4 - 1,4 - 2, etc.), which extend from stern forward and downward, form an inclination β, fix at both boards,may also dent into both board surfaces as an integral whole. Then the wave or splash rising along both boards **2** are roll downward along the surfaces of guard 5 (Figs. 4 - 3, etc.), that not only reduces the wetted area of both side wall, thereby decreases water frictional resistance;

but also creates additional lift, thrust and force moment of lateral stability. Besides, the guards may reduce or nearly eliminate the spray or splash interference in the field of vision of passengers during the vessel in operating.

The hull of the planing vessel provided by the invention may have a step at the stern (Figs. 1,6-1). When the vessel is operating in displacement state at low speed, the step must be overspreaded by a step cover **6'**, then the stern end is streamlined smooth to make water flow out of the stern unhindered, thereby the water resistance at the stern is reduced. When the hull lifts out of the water, enters planing state, step cover **6'** is retracted, the step is revealed. Now, the race of the hull is separated from the hull behind the step, hence the wetted area of the hull is reduced, so that leads to decrease the resistance greatly, and the further increase of vessel speed ensues. The step cover **6'** may be rigid, or semirigid, or flexible. The rigid cover is made of thin metal plate, which is stretched out and opened to cover the step by the transmission mechanism when the vessel moves at low speed. When the vessel enters planing state, the cover **6'** is retracted, the step is revealed. Semirigid cover **6'** is made of rigid metal plate and flexible rubber cloth, the rigid plate is stretched out or retracted by transmission mechanism, but the flexible rubber cloth by compressed air (Figs.13-1,13-2,13-3,15-1,15-2). The flexible step cover **6'** is made of flexible rubber cloth, which is air-filled and opened. The step is overspreaded during the vessel moving in displacement state. When the vessel enters planing state, cover **6'** inhales and is retracted, the step is revealed (Figs. 14-1,14-2,14-3,16-1,16-2). For the small boat with shallow draft in static state, step cover **6'** is needless. The stern may be streamlined without step, or other types.

On the basis of the hull with the features of the invention illustrated as before, a kind of propulsion and control system layout is presented as follows: At the hull rear, inner side of both boards **2** below deck **3**, in the space between deck **3** and waterline during the vessel in planing state, near the water surface one or more water - jet propulsion plants **7** are positioned (Figs.18,19,25-2,25 - 3); water jets **19** are located at the stern end; the water inlets **14** are set at the appropriate locations at bottom **1**, here the necessary distance between water inlet **14** and swell guideway **4**, bow, stern end , both boards **2** must be kept to ensure that the air can not enter water inlet **14**. In addition, the loss of water head along the way and for local area in the water entry way **17** (Fig. 22) is made to be least. The acceleration of water may be achieved by use of water pump or other way. Corresponding to water jet one by one, rudders **6** are set away from stem end slightly. The rudder surface is acted by the water - jet flow, which makes the vessel turn, or stop. Rudders **6** are fixed at stern, their rotating axis **18** is linked up with steering engine to control rudder **6** in turn. Rudder **6** may also be designed as that it may rise or descend along rotating axis **18,** that is, rudder **6** may be elevated out of the water - jet flow while it doesn't work, descended and dovetailed with the water-jet flow when the vessel turns or stops. Water jet **19** and corresponding rudder **6** are set above, but near the water surface during the vessel in planing state. For such layout, one of the advantages is that the resistance at stem is made to be the least, the other advantages are that the manoeuvrability, flexibility and seaworthiness of the vessel are heightened greatly. The vessel turns flexibly on the planing surface, with the least water resistance and small turning radius(Fig. 24) under the acting of turning force moment given by rudder **6**. Swell guideway **4** makes the hull heighten the lateral stability in turning with shallow draft. Therefore, the vessel, particularly small boat, with the features of the invention may smoothly navigate in the river or sea with deep water, rough waters, as well as shallow water, strong and rapid current, or with submerged reef.

As mentioned above, the hull of planing vessel offered by the invention adopts plane bottom **1** consisting of an isosceles triangle ahead and a rectangle behind. That makes the lift coefficient largest, wetted area and corresponding frictional resistance least, lift surface at stem lesser and at stern larger. Accordingly, the trim is small. Besides, the swell guideway **4** makes the swell height of water surface nearby the bow and boards **2** lower, then the water resistance reduces greatly, makes the hull have better course stability, lateral stability and fine manoeuvrability, flexibility, seaworthiness. Furthermore, the hull, which is dull of responding to the wave, can smooth cut through the wave,chop on rough waters and achieve the supercritical operation state (Fig.12-2).

In comparison with existing various hulls. the planing vessel hull provided by the invention can shake off water resistance in maximum limit, thus heighten its own speed greatly, at the same time, can also meet the needs of various cargo tonnage, therefore greatly better than the displacement type hull. The lift surface area and its layout of the planing vessel bottom can overcome hydrofoil craft drawbacks created by the layout of lift surface and its structure, can conquer hovercraft defects caused by depend on dynamic air cushion to support gross weight, furthermore, the bottom comprising an isoceles triangle, a rectangle and setting swell guideway can overcome the shortcomings of general planing boat hull, and conquer drawbacks of sea - knife boat in course, lateral stability and manoeuvrability,which are created by its pure triangle plane bottom. Consequently, the hull of planing vessel of the invention has advantages over almost all the hulls of conventional ships. In the same power consumption it has not only higher speed, but also in course, lateral stability, and in manoeuvrability, flexibility, seaworthiness, in smooth chopping on rough waters has advantages over various existing ships and boats.

Owing to the hull provided by the invention, particularly the hydrodynamic layout in the space between bottom **1** and deck **3**, that makes force moment of trim by stern be small, water resistance be small and the vessel enter planing state faster. As a result of shallow draft, the vessel of the invention can not only navigate on general sea and inland river, but also for small - sized boat such as tour boat and fast boat, it may be designed to be able to navigate on the inland river having strong and rapid current, submerged reef, shallow water and on littoral sea. The hull of the invention is low in power consumption, large in controllable range of change of speed and load carrying capability, and is smooth, safe and flexible in operating.

Applying example 1. In accordance with features of the invention a tour boat is designed (Figs. 17,18,19,20,21,22). The hull has a plane bottom **1** consisting of an isosceles triangle and a rectangle. Denting vertically into and lengthwise throughout bottom **1**, a swell guideway **4** having top line with inclination $\alpha$ is set, the cross section thereof has an arch top, longitudinal section has a top line with a lower front and a higher rear, width of its base plane is 2r. A pair of wave - splash guards **5** are dented one into each board **2**. At the stern, a semirigid step cover **6'** is set. At the hull rear a pair of water-jet propulsion plants **7** are set, which are symmetrically parallel to the hull centerline. A pair of rudders **6** and power plants **8** are set one by one corresponding to the water - jet propulsion plants **7**. The jets **19** are set at the stern end. The jets **19** and rudders **6** are located above, but near the water surface during the vessel in planing state. A pair of water inlets **14** are positioned one on either side of the bottom centerline. The superstructure **9** is streamlined. In the passenger cabin **12** there are driver seat **15**, several passenger seats **13**. The boat can navigate on general sea or inland river,as well as on the river or littoral sea with shallow water or strong and rapid current or submerged reef. The boat is large in controllable range of change of speed, and is smooth,safe in operating, and can smooth chop on rough waters, achieve the supercritical operation state.

Example 2. According to the features of the invention ,a boat is designed (Figs. 25 - 1,25-2,25-3,25-4,25-5,25-6,25-7) with a plane bottom **1** comprising an isoceles triangle and a rectangle. A pair of swell guideways **4** are set one on either side of the bottom centerline symmetrically. A pair of wave - splash guards **5** are set one on either board. Driver seat **15**, passenger cabin **12** and seat **13** with five seats are set. A water - jet propulsion plant **7,** power plant **8** and rudder **6** are set in mid location and parallel to the hull centerline. Water inlet **14** is set on the bottom centerline. Jet **19** and rudder **6** are located above, but near the water surface during the vessel in planing state. Windshield **20** is set at the stem. Boat is open , mobile ceiling may be set, opening the ceiling for covering the cabin when it is need, taking back the ceiling while it is needless. The draft of this boat is particularly shallow. It may run smooth and safely on the inland rivers or in lakes with shoal.

Example 3. According as features of the invention, adopting layout of the hull shown in example 2, passenger seat **13** with 7 seats is set in passenger cabin **12**. Mono - propeller may be adopted, which is set at the stern end with seat **22** of outboard motor. Twin - propeller may also be set at the stern end with two seats **21** of outboard motors. The outboard motor is taken as propeller, as seen in Figs. 26-1,26-2,26-3,26-4,26-5, 26-6,26-7.

On the basis of the hull having features offered by the invention, in accordance with different use, the water - jet propulsion, propellor or other propulsion and control systems may by adopted, corresponding cabin, deck, and superstructure may be positioned, etc.. The traffic boat(Fig. 23), salvage vessel, patrol escort and other various type small boats, middling and large, manifold vessels may be designed and builded. They may reach the speed range designed, may also reach high speed designed, may have fine course, lateral stability, seaworthiness, manoeuvrability, may reach supercritical operation state and cut through rough waters smooth in moving (Fig. 12-2), have fine flexibility in changing direction with small turning radius (Fig. 24). The performance of the planing vessel having the hull offered by the invention is better than that of existing boats and ships.

The planing vessel provided by the invention may directly apply to ship building industry.

## Claims

1.  A planing vessel comprising:

    a system of propulsion and control;
    a cabin and superstructure; and
    a hull, the hull comprising:

    two boards (2);
    a deck (3); and
    a substantially planar bottom (1) having a depression part denting upwardly into and extending lengthwise throughout said bottom in a space between said bottom and said deck, the depression part composed of one or more swell guideways (4), the base centerline of one of said swell guideways being substantially coincident with the centerline of said bottom and/or the base centerlines of an even number of said swell guideways being arranged parallel with respect to and symmetrically with respect to the centerline of said bottom,

    **characterized in that**:

said bottom (1) has an isosceles triangle portion at the front and a rectangle portion at the rear;

each one of said one or more swell guideways (4) has a cross-section of a denting shape with an arch top, or with an inverted V-shaped top, or with a top with a high center arch and two half-arches placed symmetrically at lower positions on both sides, and a longitudinal-section with a top line having a lower front and a higher rear;

said hull further comprising a pair of wave-splash guards (5) on boards below said deck (3) and above said bottom (1), said guards being inclined baffles with a lower front and a higher rear and being inlaid into boards or dented into boards to form an integrated body.

2. A planing vessel as claimed in claim 1, wherein the sizes of the triangle portion and the rectangle portion of said bottom (1) are determined according to the gross weight W and speed U of the vessel designed and referring to the expressions (1) and (2) below, wherein the expressions and equations below are based on a co-ordinate system, whose origin O is at the midpoint of the centerline of said bottom (1), OX is an ordinate axis coinciding with the centerline of said bottom, OZ is an abscissa axis being perpendicular to said OX axis; X and Z are variables in said co-ordinate system to express the position of a definite point on said bottom;

the expression (1) is $L = 2\rho U^2 a^2 \sin \theta$, wherein L is the hydrodynamic buoyancy, $\rho$ is the density of water, $\theta$ is the attack angle of said bottom against the horizontal when the vessel is in motion, and a is the half length of said bottom,

P is defined by

$$P = \int_{-a}^{a-l} T_1(x)dx + \int_{a-l}^{a} T_2(x)dx, \quad T_1(x) = \int_{-b(x)}^{b(x)} p(x,z)dz,$$

wherein

$$p(x,z) = \frac{Ka}{1-K\delta}\left\{\frac{G\exp(-\overline{G}x)\cosh k_0 z}{k_0\xi\cosh\overline{G}\cosh k_0 b} + 2\sum_{n=1}^{5}\frac{(-1)^{n-1}}{C_n^2}\left[-\sin C_n x + \right.\right.$$

$$k_0 R_n \cos B_n z(B_n \cos C_n x - k_0 \sin C_n x) + k_0 GbJ_n \cos D_n z$$

$$\left.\left.(D_n \cos E_n x - k_0 \sin E_n x)\ \right]\right\},$$

wherein
$R_n = 1/(k_0^2 + B_n^2)\cos B_n b$, $J_n = 1/(k_0^2 + D_n^2)\cos E_n$, $B_n = GC_n$, $\zeta = \sqrt{1+\varepsilon^2}$, $C_n = (2n-1)\pi/2$, $D_n = C_n/b'$, $E_n = C_n/Gb'$, $b(x) = bx/l$, $x = X/a$, $z = Z/a$, $G = \sqrt{(1-K\delta)/K\delta}$, $K = g/U^2$,

$$T_2(x) = \int_{-b}^{b} p(x,z)\ dz,$$

$\varepsilon = 0.0045$, $\overline{G} = k_0/G$, $b' = b/a$,

the expression (2) is X = M/L, wherein X is the distance between the midpoint O of the centerline of said bottom (1) and the center $O_1$ of the hydrodynamic buoyancy,

wherein:

$$M = 2\rho U^2 a^3 N\sin\theta;$$

$$N = \int_{-a}^{a-t} x T_1(x)dx + \int_{a-t}^{a} x T_2(x)dx \;;$$

M is the moment of the lifting pressure on said bottom with respect to the centerline midpoint O; l is a projection length for the length of said isosceles sides of said triangle portion of said bottom on said OX axis; t is a length of said rectangle portion of said bottom in the direction of said OX axis; 2b is a width of said rectangle portion of said bottom in the direction of said OZ axis; $W_1$ is the net weight of the vessel; $W_2$ is the load weight carried by the vessel; L= $W_1$ + $W_2$ when the vessel is in the planing state; $\theta_1$ is the attack angle of said bottom against the horizontal when the vessel is in the static state and is about 5 degrees; $k_0$ is generally in the range of less than or equal to 1 and larger than or equal to 0.1; g is the acceleration of gravity; and $\delta$ is half depth of the stern end draft.

3. A planing vessel according to claim 1 or claim 2, wherein the front end of said longitudinal top line of said swell guideway (4) denting vertically into said bottom is at the same level as or lower than the waterline when said hull is in a static state, the top line of the longitudinal section of said swell guideway (4) forming an inclination angle $\alpha$ relative to the plane of said bottom, said angle $\alpha$ and the width 2r of the base of said swell guideway (4) in its cross-section being determined according to the vessel speed U, additional hydrodynamic lift $L_0$ and additional hydro-dynamic thrust $F_0$ provided by said swell guideway (4) designed and referring to the expressions (3) and (4) below:

the expression (3) is $F_0=4\rho U^2 a^2 Q \; sin \; \theta \; sin \; \alpha$; and
the expression (4) is $L_0=4\rho U^2 a^2 Q \; sin \; \theta \; cos \; \alpha$,

wherein:

a is the half length of said bottom; $\theta$ is the attack angle of said bottom against the horizontal when the vessel is in motion; and Q is defined by:

$$Q = \frac{H_1 \tanh \overline{G}}{k_0^2 \xi \cosh k_0 b} - k_0 \sum_{n=1}^{3}\left[(-1)^{n-1} J_n H_2 \sin E_n + R_n \frac{H_3}{G}\right],$$

wherein

$$H_1 = 4r' + Ak_0^2, \; H_2 = \frac{A}{b'} - \frac{4b'r'}{C_n^2},$$

$$H_3 = AG^2 - \frac{4r'}{C_n^2}, \; A = 2r'b^2 + 4b'r^2 + 8r^3 / 3, \; r' = r/a.$$

4. A planing vessel as claimed in claim 1 or claim 3 insofar as it is dependent on claim 2, wherein the lowest point of the front end of each of said wave-splash guards (5) is at substantially the same level as or lower than the waterline when said hull is in a static state.

5. A planing vessel as claimed in claim 1 or claim 4 insofar as it is dependent on claim 3, wherein the width of the base of said swell guideway (4) in its cross section is a constant throughout said bottom.

6. A planing vessel as claimed in claim 1 or claim 4 insofar as it is dependent on claim 3, wherein the width of the base of said swell guideway (4) in its cross section is narrower toward the stem of said hull and wider toward the stern of said hull.

7. A planing vessel as claimed in any preceding claim, wherein said system of propulsion and control comprises one or more water-jet propulsion plants (7), one or more power plants (8) and one or more rudders (6);

said one or more water-jet propulsion plants (7) being positioned at the rear of said hull near but above the water surface in a space between said deck (3) and the waterline when the vessel is in a planing state, and between inner sides of said two boards, the projection of a longitudinal centerline of one of said water-jet propulsion plants coinciding with the centerline of said bottom of said hull and/or the longitudinal centerlines of an even number of said water-jet propulsion plants being arranged parallel with respect to and symmetrically with respect to the centerline of said bottom of said hull; said one or more water-jet propulsion plants having jets positioned at the stern of said hull;

said one or more rudders (6) being positioned corresponding to said jets and being close to but slightly apart from said jets, said rudders being fixed at said stern, the rotating shaft of each of said rudders being linked up with a steering engine, each of said rudders being able to rise or descend along said rotating shaft, and being elevated out of the flow generated by said jets when it is not in use and descended and dovetailed with said flow when the vessel turns or brakes;

said one or more power plants (8) being positioned in an engine room for driving said one or more water-jet propulsion plants (7);

one or more water inlets (14) each having a water entry way being provided on said bottom each having a longitudinal centerline coinciding with and/or symmetrically paralleling the centerline of said bottom, said water inlets being positioned on said bottom so that the distance between said water inlets and said swell guideway (4), the vessel's bow, the stern end and said boards (2) is kept far enough to ensure that no air enters into said water inlets when the vessel is in a planing state and that the loss of water head along the water entry way is minimized.

8. A planing vessel as claimed in any one of claims 1 to 6, wherein the said system of propulsion and control is a propeller propulsion and control system.

9. A planing vessel as claimed in any preceding claim, wherein the stern of said hull has a step.

10. A planing vessel as claimed in any one of claims 1 to 8, wherein the stern of said hull has a stepless streamline.

11. A planing vessel as claimed in any preceding claim, wherein the joints between said triangular portion and said rectangular portion of said bottom (1) are streamlined.

12. A planing vessel as claimed in any preceding claim, wherein the top of the rear of said swell guideway (4), whose base centerline coincides with the centerline of said bottom and/or the tops of the rear of a pair of swell guideways (4), whose base centerlines are parallel symmetrically to the centerline of said bottom, is/are near said deck.

**Patentansprüche**

1. Gleitwasserfahrzeug mit

einer Kabine und Aufbauten;
einem Antriebs- und Steuersystem; und
einem Rumpf, wobei der Rumpf umfasst:

zwei Bordwände (2);
ein Deck (3); und
einem im wesentlichen ebenen Boden (1) mit einem Dellenteil, das sich nach oben in den Boden ausbeult und sich der Länge nach durch diesen in einem Raum zwischen dem Boden und dem Deck erstreckt, wobei das Dellenteil aus einer oder mehreren Schwallführungsbahnen (4) aufgebaut ist, wobei die Basismittelinie einer der Schwallführungsbahnen im wesentlichen mit der Mittellinie des Bodens und/oder der Basismittellinien einer geraden Anzahl der Schwallführungsbahnen koinzidiert, die parallel und symmetrisch mit Bezug auf die Mittellinie des Bodens angeordnet sind,

**dadurch gekennzeichnet, dass**
der Boden (1) ein gleichschenkeliges Dreieckteil an der Vorderseite und ein Rechteckteil an der Hinterseite aufweist;
jeder der einen oder mehreren Schwallführungsbahnen (4) einen Querschnitt einer ausgebeulten Form mit einem Bogenoberteil oder mit einem invertiertem V-förmigen Oberteil oder mit einem Oberteil mit einem hohen Mittelbogen und zwei Halbbogen, die symmetrisch an unteren Positionen an beiden Seiten plaziert sind, und einen Längsschnitt mit einer oberen Linie aufweist, die ein niedrigeres Vorderteil und ein höheres Hinterteil aufweist;

wobei der Rumpf ferner ein Paar von Wellenspritzschutz-Vorrichtungen (5) an Bordwänden unter dem Deck (3) und über dem Boden (1) aufweist, wobei die Schutzvorrichtungen geneigte Leitbleche mit einem niedrigeren Vorderteil und einem höheren Hinterteil sind, die in Bordwände eingelegt sind oder in Bordwänden ausgebeult sind, um einen einstückigen Körper zu bilden.

2.  Gleitwasserfahrzeug gemäß Anspruch 1, bei dem die Größen des Dreieckteils und des Rechteckteils des Bodens (1) gemäß dem Bruttogewicht W und der Geschwindigkeit U des ausgestalteten Wasserfahrzeugs und mit Bezug auf die unten stehenden Ausdrücke (1) und (2) bestimmt werden, wobei die unten stehenden Ausdrücke und Gleichungen auf einem Koordinatensystem basieren, dessen Ursprung O an dem Mittelpunkt der Mittellinie des Bodens (1) ist, wobei OX ein Ordinaten-Achse ist, die mit der Mittellinie des Bodens koinzidiert, OZ eine Abzissen-Achse ist, die senkrecht zu der OX-Achse ist; X und Z Variablen in dem Koordinatensystem sind, um die Position eines festgelegten Punkts auf dem Boden ausdrücken;

der Ausdruck (1) $L = 2\rho U^2 a^2 sin\theta$ ist, wobei L der hydrodynamische Auftrieb, $\rho$ die Wasserdichte, $\theta$ der Angriffswinkel des Bodens gegen die Horizontale, wenn das Wasserfahrzeug in Bewegung ist, und a die halbe Länge des Bodens ist, wobei P definiert wird durch

$$P = \int_{-a}^{a-t} T_1(x)\,dx + \int_{a-t}^{a} T_2(x)\,dx, \quad T_1(x) = \int_{-b(x)}^{b(x)} p(x,z)\,dz$$

wobei

$$p(x,z) = \frac{K\boldsymbol{a}}{1 - K\boldsymbol{\delta}}\left\{\frac{G\exp(-\overline{G}x)\cosh k_o z}{k_o\,\boldsymbol{\xi cosh}\,\overline{G}\,\cosh k_o b} + 2\sum_{n=1}^{5}\frac{(-1)^{n-1}}{C_n^2}\left[-\sin C_n x +\right.\right.$$

$$k_0 R_n \cos B_n z\,(B_n \cos C_n x - k_0 \sin C_n x) + k_0 Gb J_n \cos D_n z$$

$$\left.\left.(D_n \cos E_n x - k_0 \sin E_n x)\right]\right\}$$

wobei $\quad R_n = 1/(k_0^2 + B_n^2)\cos B_n b,\; J_n = 1/(k_0^2 + D_n^2)\cos E_n,\; B_n = GC_n,\; \zeta = \sqrt{1+\varepsilon^2},\; C_n = (2n-1)\pi/2,\; D_n = C_n/b',\; E_n = C_n/Gb',$ $b(x) = bx/l,\; x = X/a,\; z = Z/a,\; \overline{G} = \sqrt{(1-K\delta)/K\delta},\; K = g/U^2,$

$$T_2(x) = \int_{-b}^{b} p(x,z)\,dz,$$

$\varepsilon = 0.0045,\; \overline{G} = k_0/G,\; b' = b/a,$

wobei der Ausdruck (2) X = M/L ist, wobei X der Abstand zwischen dem Mittelpunkt O der Mittellinie des Bodens (1) und der Mitte $O_1$ des hydrodynamischen Auftriebs ist,

wobei

$$M = 2\rho U^2 a^3 N sin\theta;$$

$$N = \int_{-a}^{a-t} xT_1(x)\,dx + \int_{a-.t}^{a} xT_2(x)\,dx\ ;$$

wobei M das Drehmoment des Auftriebdrucks auf den Boden mit Bezug auf den Mittellinien-Mittelpunkt O ist; l eine Projektionslänge für die Länge der gleichschenkeligen Seiten des Dreieckteils des Bodens an der OX-Achse ist; t eine Länge des Rechteckteils des Bodens in der Richtung der OX-Achse ist; 2b eine Breite des Rechteckteils des Bodens in Richtung der OZ-Achse ist; $W_1$ das Nettogewicht des Wasserfahrzeugs ist; $W_2$ das von dem Wasserfahrzeug getragene Ladegewicht ist; L = $W_1$ + $W_2$, wenn das Wasserfahrzeug in dem Gleitzustand ist; $\theta_1$ der Angriffswinkel des Bodens gegen die Horizontale ist, wenn das Wasserfahrzeug in dem statischen Zustand ist, wobei dieser etwa 5° ist; $k_0$ im allgemeinen in dem Bereich kleiner als oder gleich 1 und größer als oder gleich 0,1 ist; g die Erdbeschleunigung ist; und δ die halbe Tiefe des Heckenden-Tiefgangs ist.

3. Gleitwasserfahrzeug gemäß Anspruch 1 oder Anspruch 2, bei dem das vordere Ende der oberen Linie in Längsrichtung der Schwallführungsbahn (4), die sich vertikal in den Boden ausbeult, auf dem gleichen Niveau wie oder niedriger als die Wasserlinie ist, wenn der Rumpf in einem statischen Zustand ist, wobei die obere Linie des Längsschnitts der Schwallführungsbahn (4) einen Neigungswinkel α bezüglich der Ebene des Bodens bildet, wobei der Winkel α und die Breite 2r der Basis der Schwallführungsbahn (4) in ihrem Querschnitt gemäß der Wasserfahrzeuggeschwindigkeit U, des zusätzlichen hydrodynamischen Auftriebs $L_o$ und des von der ausgebeulten Schwallführungsbahn (4) bereitgestellten zusätzlichen hydrodynamischen ausgestalteten Vortriebs $F_0$ und mit Bezug auf die nachstehenden Ausdrücke (3) und (4) bestimmt werden:

der Ausdruck (3) $F_0 = 4\rho U^2 a^2 Q \sin\theta \sin\alpha$ ist; und
der Ausdruck (4) $L_0 = 4\rho U^2 a^2 Q \sin\theta \cos\alpha$ ist,

wobei:

a die halbe Länge des Bodens ist; θ der Angriffswinkels des Bodens gegen die Horizontale, wenn das Wasserfahrzeug in Bewegung ist; und Q definiert ist durch:

$$Q = \frac{H_1 \tanh \overline{G}}{k_0^2 \boldsymbol{\{cosh} k_0 b} - k_0 \sum_{n=1}^{3} \left[ (-1)^{n-1} J_n H_2 \sin E_n + R_n \frac{H_3}{G} \right],$$

wobei

$$H_1 = 4r' + A k_0^2, \quad H_2 = \frac{A}{b'} - \frac{4b'r'}{C_n^2},$$

$$H_3 = AG^2 - \frac{4r'}{C_n^2}, \quad A = 2r'b^2 + 4b'r'^2 + 8r'^3/3, \quad r' = r/a.$$

4. Gleitwasserfahrzeug gemäß Anspruch 1 oder Anspruch 3, insoweit wie es vom Anspruch 2 abhängig ist, bei dem der unterste Punkt des vorderen Endes jeder der Wellenspritzschutz-Vorrichtungen (5) auf im wesentlichen dem gleichen Niveau wie oder niedriger als die Wasserlinie ist, wenn der Rumpf in einem statischen Zustand ist.

5. Gleitwasserfahrzeug gemäß Anspruch 1 oder Anspruch 4, insoweit wie es vom Anspruch 3 abhängig ist, bei dem die Breite der Basis der Schwallführungsbahn (4) in ihrem Querschnitt eine Konstante überall in dem Boden ist.

6. Gleitwasserfahrzeug gemäß Anspruch 1 oder 4, insoweit wie es vom Anspruch 3 abhängig ist, wobei die Breite der Basis der Schwallführungsbahn (4) in ihrem Querschnitt schmaler zu dem Bug des Rumpfes hin und breiter zu dem Heck des Rumpfes hin ist.

**7.** Gleitwasserfahrzeug gemäß einem der vorhergehenden Ansprüche, bei dem das Antriebs- und Steuersystem eine oder mehrere Wasserstrahlantriebsanlagen (7), eine oder mehrere Kraftanlagen (8) und ein oder mehrere Ruder (6) umfasst;

wobei die eine oder die mehreren Wasserstrahlantriebsanlagen (7) an dem hinteren Teil des Rumpfes nahe jedoch oberhalb der Wasseroberfläche in einem Raum zwischen dem Deck (3) und der Wasserlinie, wenn das Wasserfahrzeug in einem Gleitzustand ist, und zwischen den inneren Seiten der beiden Bordwände positioniert ist/sind, wobei die Projektion einer Längsmittellinie einer der Wasserstrahlantriebsanlagen mit der Mittellinie des Bodens des Rumpfes und/oder der Längsmittellinien einer geraden Anzahl der parallel und symmetrisch mit Bezug auf die Mittellinie des Bodens des Rumpfes angeordneten Wasserstrahlantriebsanlagen koinzidieren; wobei eine oder mehrere Wasserstrahlantriebsanlagen an dem Heck des Rumpfes positionierte Düsen aufweisen;

wobei das eine oder die mehrere Ruder (6) entsprechend den Düsen und nahe, jedoch geringfügig getrennt von den Düsen positioniert sind, wobei die Ruder an dem Heck befestigt sind, wobei die Drehwelle jedes der Ruder mit einer Lenkmaschine verknüpft sind, wobei jedes der Ruder imstande ist, entlang der Drehwelle anzusteigen oder abzusinken, und aus der von den Düsen erzeugten Strömung herausgehoben wird, wenn es nicht in Gebrauch ist, und abgesenkt und mit der Strömung verbunden (dovetailed) wird, wenn sich das Wasserfahrzeug dreht oder bremst;

wobei die eine oder die mehreren Kraftanlagen (8) in einem Maschinenraum zum Antreiben der einen oder der mehreren Wasserstrahlantriebsanlagen (7) positioniert ist/sind;

eine oder mehrere Wasserzuläufe (14), die jeweils einen an dem Boden vorgesehenen Wasserzugang aufweisen, jeweils mit einer Längsmittellinie, die mit der Mittellinie des Bodens koinzidiert und/oder dazu symmetrisch parallel ist, wobei die Wasserzuläufe an dem Boden derart positioniert sind, dass der Abstand zwischen den Wasserzuläufen und der Schwallführungsbahn (4), dem Bug des Wasserfahrzeugs, dem Heckende und den Bordwänden (2) weit genug gehalten wird, um sicherzustellen, dass keine Luft in die Wasserzugänge eintritt, wenn das Wasserfahrzeug in einem Gleitzustand ist, und dass der Verlust der Wassersäule entlang des Wasserzugangs minimiert wird.

**8.** Gleitwasserfahrzeug gemäß einem der Ansprüche 1 bis 6, bei dem das Antriebs- und Steuersystem ein Propellerantriebsund Steuersystem ist.

**9.** Gleitwasserfahrzeug gemäß einem der vorhergehenden Ansprüche, bei dem das Heck des Rumpfes eine Stufe aufweist.

**10.** Gleitwasserfahrzeug gemäß einen der Ansprüche 1 bis 8, bei dem das Heck des Rumpfes einen stufenlose Strömungslinie aufweist.

**11.** Gleitwasserfahrzeug gemäß einem der vorhergehenden Ansprüche, bei dem die Verbindungsstellen zwischen dem Dreieckteil und dem Rechteckteil des Bodens (1) stromlinienförmig ausgebildet sind.

**12.** Gleitwasserfahrzeug gemäß einem der vorhergehenden Ansprüche, bei dem das Oberteil des Hinterteils der Schwallführungsbahn (4), dessen Basismittellinie mit der Mittellinie des Bodens koinzidiert, und/oder die Oberteile des Hinterteils eines Paars von Schwallführungsbahnen (4), deren Basismittellinien parallel symmetrisch mit der Mittellinie des Bodens sind, nahe dem Deck ist/sind.


**Revendications**

**1.** Navire à coque planante comprenant :

un système de propulsion et de commande,
une cabine et une superstructure, et
une coque, la coque comprenant :

deux bordés (2),
un pont (3), et
un fond sensiblement plat (1) comportant une partie en creux pénétrant vers le haut dans le fond et s'étendant sur la longueur de celui-ci, dans un espace entre le fond et le pont, la partie en creux étant composée d'un ou plusieurs passages de houle (4), l'axe central de base de l'un des passages de houle étant sensiblement en coïncidence avec l'axe central du fond et/ou les axes centraux de base d'un nombre pair des passages de houle étant agencés parallèlement à l'axe central du fond et symétriquement par rapport à celui-ci,

**caractérisé en ce que** :

ledit fond (1) comporte une partie en triangle isocèle à l'avant et une partie rectangulaire à l'arrière,
chacun desdits un ou plusieurs passages de houle (4) présente une section transversale en forme de creux avec une partie supérieure en arc, ou avec une partie supérieure en forme de V inversé, ou avec une partie supérieure ayant un arc central élevé et deux demi-arcs placés symétriquement à des positions inférieures des deux côtés, et une section longitudinale présentant une courbe supérieure ayant un avant plus bas et un arrière plus élevé,
ladite coque comprenant en outre une paire de protections contre l'éclaboussure des vagues (5) sur des bordés en dessous du pont (3) et au-dessus du fond (1), lesdites protections étant des déflecteurs inclinés présentant un avant plus bas et un arrière plus élevé et qui sont incorporés dans les bordés ou en creux dans les bordés afin de former un corps intégré.

2. Navire à coque planante selon la revendication 1, dans lequel les dimensions de la partie en triangle et la partie rectangulaire dudit fond (1) sont déterminées conformément au tonnage W et à la vitesse U du navire conçu et en se référant aux expressions (1) et (2) ci-dessous, dans lequel les expressions et les équations ci-dessous sont fondées sur un système de coordonnées, dont l'origine O est au point milieu de l'axe central dudit fond (1), OX est un axe des ordonnées coïncidant avec l'axe central du fond, OZ est un axe des abscisses qui est perpendiculaire à l'axe OX, X et Z sont des variables dans ledit système de coordonnées destinées à représenter la position d'un point défini sur le fond,

l'expression (1) est $L = 2\rho U^2 \alpha^2 \sin\theta$, dans laquelle L est la flottabilité hydrodynamique, $\rho$ est la densité de l'eau, $\theta$ est l'angle d'attaque dudit fond par rapport à l'horizontale lorsque le navire est en mouvement, et a représente la demi-longueur du fond,

P est défini par

$$P = \int_{-a}^{a-l} T_1(x)dx + \int_{a-l}^{a} T_2(x)dx, \quad T_1(x) = \int_{-b(x)}^{b(x)} p(x,z)dz,$$

dans lequel

$$p(x,z) = \frac{Ka}{1-K\delta}\left\{\frac{G\exp(-\bar{G}x)\cosh k_0 z}{k_0 \xi \cosh \bar{G} \cosh k_0 b} + 2\sum_{n=1}^{s}\frac{(-1)^{n-1}}{C_a^2}\left[-\sin C_n x + \right.\right.$$

$$k_0 R_n \cos B_n z(B_n \cos C_n x - k_0 \sin C_n x) + k_0 Gb J_n \cos D_n z$$

$$\left.\left.(D_n \cos E_n x - k_0 \sin E_n x)\right]\right\},$$

où $R_n = 1/(k_0^2 + B_n^2)\cos B_n b$, $J_n = 1/(k_0^2 + D_n^2)\cos E_n$, $B_n = GC_n$, $\zeta = \sqrt{1+\varepsilon^2}$, $C_n = (2n-1)\pi/2$, $D_n = C_n/b'$, $E_n = C_n/Gb'$, $b(x) = bx/l$, $x = X/a$, $z = Z/a$, $G = \sqrt{(1-K\delta)/K\delta}$, $K = g/U^2$,

$$T_2(x) = \int_{-b}^{b} p(x,z)\ dz,$$

$\varepsilon$=0.0045, $\overline{G}=k_0/G$, $b'=b/a$,

$$T_2(x) = \int\limits_{-b}^{b} p(x,z)dz,$$

l'expression (2) est X = M/L, où X est la distance entre le point milieu O de l'axe central du fond (1) et le centre $O_1$ de la flottabilité hydrodynamique,

où :

$$M=2\rho U^2 a^3 N\sin\theta;$$

$$N = \int\limits_{-a}^{a-t} xT_1(x)dx + \int\limits_{a-t}^{a} xT_2(x)dx \ ;$$

M est le moment de la pression de relèvement sur le fond par rapport au point milieu de l'axe central O, l est une longueur de projection pour la longueur des côtés isocèles de la partie en triangle du fond sur l'axe OX, t est une longueur de la partie rectangulaire du fond dans la direction de l'axe OX, 2b est une largeur de la partie rectangulaire du fond dans la direction de l'axe OZ, $W_1$ est le tonnage net du navire, $W_2$ est la charge utile portée par le navire, L = $W_1$ + $W_2$ lorsque le navire est dans l'état planant, $\theta_1$ est l'angle d'attaque du fond vis-à-vis de l'horizontale lorsque le navire est dans l'état statique et il est d'environ 5 degrés, $k_0$ est généralement dans la plage inférieure ou égale à 1 et supérieure ou égale à 0,1, g représente l'accélération de la pesanteur, et $\delta$ est la demi-profondeur du tirant d'eau arrière.

3.  Navire à coque planante selon la revendication 1 ou la revendication 2, dans lequel l'extrémité avant de ladite courbe supérieure longitudinale du passage de houle (4) pénétrant verticalement dans le fond est au même niveau ou plus bas que la ligne d'eau lorsque la coque est dans un état statique, la courbe supérieure de la section longitudinale du passage de houle (4) formant un angle d'inclinaison $\alpha$ par rapport au plan du fond, l'angle $\alpha$ et la largeur 2r de la base du passage de houle (4) en sa section transversale étant déterminés conformément à la vitesse du navire U, au soulèvement hydrodynamique additionnel $L_0$ et à la poussée hydrodynamique additionnelle $F_0$ fournie par le passage de houle (4), conçu et se référant aux expressions (3) et (4) ci-dessous :

l'expression (3) est $F_0 = 4\rho U^2 a^2 Q\sin\theta\sin\alpha$, et
l'expression (4) est $L_0 = 4\rho U^2 a^2 Q\sin\theta\cos\alpha$,

dans lesquelles :

a est la demi-longueur du fond, $\theta$ est l'angle d'attaque du fond vis-à-vis de l'horizontale lorsque le navire est en mouvement, et Q est défini par :

$$Q = \frac{H_1 \tanh \overline{G}}{k_0^2 \xi \cosh k_0 b} - k_0 \sum_{n=1}^{3}\left[ (-1)^{n-1} J_n H_2 \sin E_n + R_n \frac{H_3}{G} \right],$$

où

$$H_1 = 4r' + Ak_0^2, \quad H_2 = \frac{A}{b'} - \frac{4b'r'}{C_n^2},$$

$$H_3 = AG^2 - \frac{4r'}{C_n^2}, \quad A = 2r'b'^2 + 4b'r'^2 + 8r'^3 / 3, \quad r' = r/a.$$

**4.** Navire à coque planante selon la revendication 1 ou la revendication 3, dans la mesure où elle dépend de la revendication 2, dans lequel le point le plus bas de l'extrémité avant de chacune des protections contre l'éclaboussure des vagues (5) est pratiquement au même niveau ou à un niveau inférieur à la ligne d'eau lorsque la coque est dans un état statique.

**5.** Navire à coque planante selon la revendication 1 ou la revendication 4, dans la mesure où elle dépend de la revendication 3, dans lequel la largeur de la base du passage de houle (4) est constante en section transversale sur tout le fond.

**6.** Navire à coque planante selon la revendication 1 ou la revendication 4, dans la mesure où elle dépend de la revendication 3, dans lequel la largeur de la base du passage de houle (4) est plus étroite en section transversale vers l'étrave de la coque et plus large vers l'arrière de la coque.

**7.** Navire à coque planante selon l'une quelconque des revendications précédentes, dans lequel le système de propulsion et de commande comprend une ou plusieurs installations de propulsion à éjection d'eau (7), une ou plusieurs installations de propulsion (8) et un ou plusieurs gouvernails (6),

lesdites une ou plusieurs installations de propulsion à éjection d'eau (7) étant positionnées à l'arrière de la coque près de la surface de l'eau, mais au-dessus de celle-ci, dans un espace entre le pont (3) et la ligne d'eau lorsque le navire est dans un état planant, et entre les faces intérieures des deux bordés, la projection d'un axe central longitudinal de l'une des installations de propulsion à éjection d'eau coïncidant avec l'axe central du fond de la coque et/ou les axes centraux longitudinaux d'un nombre pair des installations de propulsion à éjection d'eau étant disposés parallèlement à l'axe central du fond de la coque et symétriquement par rapport à celui -ci, lesdites une ou plusieurs installations de propulsion à éjection d'eau comportant des éjecteurs positionnés à l'arrière de la coque,

lesdits un ou plusieurs gouvernails (6) étant positionnés de façon correspondante aux éjecteurs et étant proches mais légèrement écartés des éjecteurs, les gouvernails étant fixés audit arrière, l'axe de rotation de chacun des gouvernails étant accouplé à un moteur de timonerie, chacun des gouvernails pouvant monter ou descendre le long dudit arbre de rotation, et étant relevé en dehors de l'écoulement généré par les éjecteurs lorsqu'il n'est pas en utilisation et abaissé et en queue d'aronde avec ledit écoulement lorsque le navire vire ou ralentit,

lesdites une ou plusieurs installations de propulsion (8) étant positionnées dans une salle des machines afin d'entraîner lesdites une ou plusieurs installations de propulsion à éjection d'eau (7),

une ou plusieurs entrées d'eau (14) présentant chacune un passage d'entrée d'eau qui est disposé sur le fond, comprenant chacune un axe central longitudinal en coïncidence avec l'axe central du fond et/ou symétriquement parallèle à celui-ci, lesdites entrées d'eau étant positionnées sur le fond de manière à ce que la distance entre les entrées d'eau et le passage de houle (4), la proue du navire, l'extrémité arrière et les bordés (2) soit maintenue suffisamment éloignée pour assurer qu'il ne pénètre pas d'air dans les entrées d'eau lorsque le navire est dans un état planant et que la perte de hauteur d'eau le long du passage d'entrée d'eau soit minimisée.

**8.** Navire à coque planante selon l'une quelconque des revendications 1 à 6, dans lequel le système de propulsion et de commande est un système de propulsion et de commande à hélice.

**9.** Navire à coque planante selon l'une quelconque des revendications précédentes, dans lequel l'arrière de la coque présente un décrochement.

**10.** Navire à coque planante selon l'une quelconque des revendications 1 à 8, dans lequel l'arrière de la coque présente un profil sans décrochement.

**11.** Navire à coque planante selon l'une quelconque des revendications précédentes, dans lequel les jonctions entre ladite partie triangulaire et ladite partie rectangulaire du fond (1) sont profilées.

**12.** Navire à coque planante selon l'une quelconque des revendications précédentes, dans lequel la partie supérieure de l'arrière du passage de houle (4), dont l'axe central de base coïncide avec l'axe central du fond et/ou les parties supérieures de l'arrière d'une paire de passages de houle (4), dont les axes centraux de base sont symétriquement parallèles à l'axe central du fond, est/sont proche(s) dudit pont.

FIG. 1

FIG. 2

FIG. 3

FIG. 4

FIG. 4-1

FIG. 4-2

FIG. 4-3

FIG. 4-4

FIG. 4-5

FIG. 4-6

FIG. 4-7

FIG. 5

FIG. 6-1

FIG. 6-2

FIG. 6-3

FIG. 6-4

FIG. 6-5

FIG. 6-6

FIG. 6-7

FIG. 6-8

FIG. 7-1

FIG. 7-2

FIG. 7-3

FIG. 7-4

FIG. 8-1

FIG. 8-2

FIG. 8-3

FIG. 8-4

FIG. 9-1

FIG. 9-2

FIG. 9-3

FIG. 9-4

**(A)**                   **(B)**

FIG. 10

FIG. 11

FIG. 12-1

FIG. 12-2

FIG. 13-1

FIG. 13-2

FIG. 13-3

FIG. 14-1

FIG. 14-2

FIG. 14-3

FIG. 15-1

FIG. 15-2

FIG. 16-1

FIG. 16-2

FIG. 17

FIG. 18

FIG. 19

FIG. 20

FIG. 21

FIG. 22

FIG. 23

FIG. 24

FIG. 25-1

FIG. 25-2

FIG. 25-3

FIG. 25-4

FIG. 25-5

FIG. 25-6

FIG. 25-7

FIG. 26-1

FIG. 26-2

FIG. 26-3

FIG. 26-4

FIG. 26-5

FIG. 26-6

FIG. 26-7